# EUROPEAN PATENT APPLICATION

(11) **EP 4 752 655 A1**
(43) Date of publication of application: **03.06.2026**
(21) Application number: 24216325.1
(22) Date of filing: 29.11.2024
(51) Int. Cl.: G05B 19/418, G05B 23/02, G06F 8/35

(54) **SYSTEMS AND METHODS FOR MANAGING A RELATIONSHIP BETWEEN INDUSTRIAL SITE AND INDUSTRIAL AUTOMATION PLATFORM**

(71) Applicant: Siemens Aktiengesellschaft, 80333 München (DE)
(72) Inventor: THIAGARAJAN, Sezhiyan, 560102 Bangalore, Karnataka (IN); WITTE, Martin, 91126 Schwabach (DE)
(74) Representative: Isarpatent

(57) **Abstract**

Disclosed is a method for managing a relationship between the industrial site and the industrial automation platform. The method includes receiving coding conventions associated with the industrial automation platform intended to control assets within the industrial site, generating a site template by mapping the coding conventions with corresponding assets based on predefined standards, creating an industrial site ontology based on the site template and the predefined standards, generating a set of rules based on mapping the coding conventions to the industrial site ontology, generating industrial site models based on correlating the set of rules and a knowledge graph, classifying the assets based on the coding conventions, and establishing the relationship between the industrial site and the industrial automation platform based on the classification such that the industrial automation platform manages, monitors, and controls the assets within the industrial site according to the predefined standards.

## Description

The present invention relates to the field of industrial automation and more particularly relates to systems and methods for managing a relationship between an industrial site and an industrial automation platform.

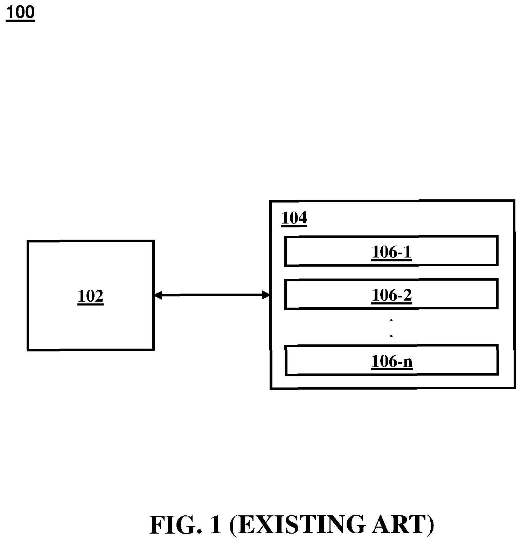

The relationship between the industrial automation platform and the industrial site is essential to the efficient operation of manufacturing plants. The industrial automation platform serves as the control and monitoring backbone for the industrial site, thus ensuring that the operations run smoothly, efficiently, and with minimal human intervention. Control software, Supervisory Control and Data Acquisition (SCADA), and visualization software such as embedded software, Programmable Logic Controller (PLC) automation software, or Human-Machine Interface (HMI) software associated with the industrial automation platform structurally and semantically relate to the manufacturing plants or the assets within the plants. Such control and visualization software assist in managing and visualizing the assets within the industrial site. Further, the control and visualization software may include code structures that define to the organization of the code and the design of the assets within the industrial site, ensuring interaction between the assets. The code structures relate directly to the physical components or operations of the industrial site. In other words, organization and the structure of the control and visualization software reflects the underlying processes and machinery it controls, and the data it presents corresponds to real-world system states and operations. FIG 1 illustrates such a relationship between the industrial automation platform 102 and the industrial site 104, in accordance with the state of the art. The industrial site 104 includes one or more assets 106-1, 106-2, ... 106-n (collectively referred to as "one or more assets 106"). Based on the relationship, the industrial automation platform 102, among other things, directly controls the one or more assets 106 within the industrial site 104, facilitates communication between the one or more assets 106, receives data from the industrial site 104, processes the data, and sends control signals to adjust the operation of the one or more assets 106.

However, the efficient handling of the relationships between the industrial automation platform 102 and the industrial site 104 in a unified way presents a significant technical challenge. Specifically, it becomes challenging to consistently manage the relationships between the control systems, SCADA, visualization software, and the one or more assets 106. Further, automating the creation and updating of these relationships is difficult, particularly when the industrial site 104 configurations, processes, or software components change frequently. This requires sophisticated tools to handle dynamic updates without introducing errors. Furthermore, using the relationships for Information Technology (IT)-based services, such as data analytics, cloud integration, or remote monitoring, becomes difficult due to issues like compatibility, scalability, and security across different systems and platforms.

In some conventional techniques, the industrial site 104 is often represented as a Bill of Materials (BoM) structure, which provides a detailed listing of the one or more assets 106 and their relationships. Various conventional tools exist to manage and organize mechanical construction data within the BoM structure. Whereas many automotive Original Equipment Manufacturers (OEMs) and machine builders still rely on Excel-based lists to define the component structure of the industrial site 104.

In some conventional techniques, the relationships are typically created during the system engineering process using conventional tools or specialized compilers, designed to work within specific environments, that generate parts of the embedded software or automation platform 102. The conventional tools use the plant descriptions along with a rule set to establish these relationships. However, the resulting relationships are often inflexible and difficult to reuse outside of the specific compiler environment. This inflexibility creates significant challenges while introducing new assets within the industrial site. For example, when a new robotic arm is added to an existing automated production line, the new robotic arm needs to communicate with the existing assets while being managed by the existing control and visualization software. However, incorporating the new robotic arm operation into the existing workflow requires updating the existing relationships. Due to the inflexible existing relationships, integrating the new robotic arm within the industrial site becomes a difficult as well as a time-consuming task.

In light of the above, there exists a need for an improved system and method for creating a framework for allowing the industrial automation platform to control and monitor various assets of the industrial site.

Therefore, it is an object of the present invention to provide a system, apparatus, and method for managing a relationship between an industrial site and an industrial automation platform.

Throughout the present disclosure, the term "site", "industrial site" and "industrial environment" as used herein interchangeably refers to a set-up with a plurality of assets such as a power plant, wind farm, power grid, manufacturing facility, process plants, buildings (residential or non-residential areas), farmlands, ship dockyard, and so on. Examples of the industrial site may include a complex industrial set-up such as a manufacturing facility, process plant, storage facility, or transportation. It will be appreciated that the industrial site may refer to any vertical and/or domain in business. For example, different verticals treated as the industrial site for the purpose of this disclosure may include, but not limited to, automobiles, textiles, every distribution, energy production, buildings, factories, and medical equipment. For the sake of simplicity and brevity of the invention, the invention is explained with respect to the industrial site. A person skilled in the art would understand that the concepts disclosed herein can be applied across multiple domains such as finance, marketing, legal, medicine, etc. Therefore, the claims appended herein shall not be construed as limiting to the industrial site only.

Throughout the present disclosure, the term "industrial automation platform" or "automation platform" as used herein interchangeably refers to a system designed to integrate and automate industrial processes in manufacturing, production, or other industrial environments. The industrial automation platform connects assets such as physical equipment, machinery, sensors, and control systems with software tools to enable real-time monitoring, control, optimization, and predictive analytics. The industrial automation platform may comprise devices that collect real-time data including, but not limited to, sensors and actuators. The industrial automation platform may also comprise control systems including, but not limited to, PLCs, Distributed Control Systems (DCS), and SCADA. The industrial automation platform may also comprise tools for edge computing, cloud integration, data visualization, analytics and insights, and the HMI for user interaction.

Throughout the present disclosure, the term "one or more coding conventions" or "coding conventions" as used herein interchangeably refers to a set of standardized rules and guidelines for writing codes or programming scripts in a consistent manner. The coding conventions may include naming rules for variables, functions, and blocks in control programs (such as those in PLC or SCADA systems). The coding conventions may also include structural rules covering various aspects of code structure, such as indentation, file organization, naming conventions, and modularization. The coding conventions may also include library standards defining how software libraries should be created, organized, and used.

Throughout the present disclosure, the term "site template" as used herein refers to a standardized framework or blueprint of the industrial site generated by mapping the one or more coding conventions to specific assets of the industrial sites based on one or more predefined standards. The site template may include but is not limited to, the organizational hierarchy of the industrial site, physical layout, and specific processes relevant to that type of the industrial site. Specifically, the site template may provide a structured representation outlining typical equipment (e.g., reactors, mixers, pumps), processes (e.g., blending, heating, cooling), and control systems (e.g., PLCs, SCADA systems) within the industrial environment. The site template may also represent the relationships between the assets of the industrial site.

Throughout the present disclosure, the term "assets" or "one or more assets" may refer to any device, system, instrument, or machinery manufactured or used in an industry that may be employed for performing an operation. In some cases, assets may also include any devices or instruments deployed or functioning in a non-industrial environment such as buildings. Examples of assets include any machinery in the industrial site or technical installation/facility such as motors, gears, bearings, shafts, switchgear, rotors, circuit breakers, protection devices, remote terminal units, transformers, reactors, disconnectors, gear-drive, gradient coils, magnet, chillers, radio frequency coils, appliances, electronic devices, chillers, pumps, heat exchangers, cooling towers, air compressors, boilers, fluid bed driers, coating machines, carbonation towers etc.

Throughout the present disclosure, the term "industrial site ontology" or "ontology" may refer to a detailed structured representation of the assets and operations within the industrial site, including buildings, equipment, processes, safety protocols, utility systems, and the relationships between them. The industrial site ontology may indicate the structured hierarchy of the industrial site and may be created based on the site template and one or more predefined standards. The industrial site ontology may provide a layered view of the industrial site's assets.

Throughout the present disclosure, the term "set of rules" or "rules" may refer to regulations governing the relationships between the assets, the interaction between the assets, and the handling of data within the system. The set of rules may be generated to standardize interactions between the assets by mapping the one or more coding conventions to the industrial site ontology, thereby setting instructions for how each asset is to be managed and monitored.

Throughout the present disclosure, the term "knowledge graph" as used herein refers to a heterogeneous database comprising information pertaining to the industrial site and the assets. The knowledge graph is a centralized repository or database that contains asset-specific information, process-specific information, sensor-specific information, etc. The knowledge graph also contains information relevant to the specific industry, sector, or domain in which the organization operates. This may include technical specifications, manufacturing processes, equipment manuals, safety procedures, regulatory requirements, and industry standards. The knowledge graph also comprises information extracted from documentation of routine activities at the industrial site, one or more assets located at the industrial site, performance parameters, efficiency parameters, drifts, anomalies, root cause analysis, prediction, resolution anomalies, etc. The knowledge graph also comprises information on the industrial site and its assets in a hierarchical manner. The knowledge graph also comprises images, videos, audio, etc. having information on the industrial site.

Throughout the present disclosure, the term "industrial site models" may refer to a structured representations of the industrial site generated based on correlating the set of rules and the knowledge graph. The industrial site models may include the representation of placements and interconnections between the assets based on functions, locations, and dependencies of the assets.

Throughout the present disclosure, the term "predefined standards" may refer to established norms, guidelines, or specifications, typically set by regulatory bodies, that industrial sites must comply. Advantageously, the predefined standards ensure safe, efficient, and compliant operations. The predefined standards may include, but are not limited to, ISA-88 (Batch Control Standard), ISA-95 (Enterprise-Control System Integration Standard), and similar standards.

Throughout the present disclosure, the term "user" as used herein refers to a human interacting with the system for monitoring or being monitored.

The object of the present invention is achieved by a computer-implemented method for managing a relationship between an industrial site and an industrial automation platform. In an embodiment, the industrial automation platform comprises at least one of, the PLC, Panel, Industrial Information Hub (IIH) Edge data services, and Supervisory Control and Data Acquisition (SCADA) systems. The method comprises receiving, by one or more processors, one or more coding conventions associated with the industrial automation platform intended to control one or more assets within the industrial site. In an embodiment, the one or more coding conventions comprise at least one of, naming rules, structural rules, and library standards. Advantageously, the one or more coding conventions significantly improve the management and operational efficiency of the industrial site.

The method further comprises generating, by the one or more processors, a site template by mapping the one or more coding conventions with corresponding one or more assets based on one or more predefined standards. In an embodiment, the site template indicates a hierarchy of the industrial site. In an embodiment, the site template may be based on user specified parameters. Advantageously, the site template ensures that the industrial site operates efficiently, meets regulatory standards, and can be easily managed.

The method further comprises creating, by the one or more processors, an industrial site ontology based on the site template and the one or more predefined standards. In an embodiment, the industrial site ontology indicates a hierarchical structure of the one or more assets within the industrial site. In an embodiment, creating the industrial site ontology is based on the one or more predefined standards indicating rules, structures, and configurations for managing the one or more assets within the industrial site. Advantageously, the industrial site ontology facilitates a better understanding of the industrial site, ensuring seamless data integration as well as compliance with standards.

The method further comprises generating, by the one or more processors, a set of rules based on mapping the one or more coding conventions to the industrial site ontology. Advantageously, the set of rules improves interoperability between the one or more assets within the industrial site.

In an embodiment, the method further includes generating, by the one or more processors, one or more industrial site models based on correlating the set of rules and the knowledge graph. In an embodiment, the one or more industrial site models indicate relationships between the one or more assets within the industrial automation platform. Advantageously, the industrial site models ensure efficient operation of the industrial site while maximizing performance, minimizing downtime, and ensuring compliance with industry standards and regulations.

Further, the method comprises classifying, by the one or more processors, the one or more assets based on the one or more coding conventions. Advantageously, the classification of the one or more assets enables better data integration, and improved compliance. Further, the classification supports future digitalization efforts, thereby contributing to overall operational excellence.

In an embodiment, the method further includes establishing, by the one or more processors, the relationship between the industrial site and the industrial automation platform based on the classification such that the industrial automation platform manages, monitors, and controls the one or more assets within the industrial site according to the one or more predefined standards. Advantageously, establishing the relationship between the industrial site and the industrial automation platform helps the user to easily identify which part of the industrial automation platform needs to be modified when the user wishes to update or expand the industrial site, thereby enhancing decision-making. The establishment of the relationship between the industrial site and the industrial automation platform also helps the user to easily identify which part of the industrial site needs to be updated or expanded when the user wishes to modify the industrial automation platform.

In an embodiment, the method further includes creating the knowledge graph based on correlating the one or more coding conventions and the site template. Advantageously, the knowledge graph enables efficient utilization of the relationships between the industrial site and the industrial automation platform.

Further, the method comprises generating visualizations based on the knowledge graph and industrial site ontology. In an embodiment, the visualization comprises the hierarchical structure of the industrial site, relationships between the industrial automation platform and the one or more assets, and performance metrics. Advantageously, the visualizations improve management and operational insights of the industrial site.

In an embodiment, the method further comprises generating real-time visualizations corresponding to interactions of the industrial automation platform and the one or more assets. Advantageously, the real-time tracking visualizations improve operational visibility, optimize performance, and enable proactive decision-making.

In an embodiment, the method further comprises generating reports comprising automation platform performance, operational anomalies, and maintenance schedules. In an embodiment, the reports are generated based on data extracted from the knowledge graph and the one or more predefined standards. Advantageously, the reports ensure the smooth operation of the industrial site.

The object of the present invention is also achieved by a system for establishing the relationship between the industrial site and the industrial automation platform. The system comprises a memory and a processing unit communicatively coupled to the memory. In an embodiment, the processing unit is configured to receive the one or more coding conventions associated with the industrial automation platform. In an embodiment, the one or more coding conventions intends to control the one or more assets within the industrial site. The processing unit is further configured to generate the site template by mapping the one or more coding conventions with the one or more assets based on one or more predefined standards. In an embodiment, the site template indicates the industrial site hierarchy of the one or more assets. The processing unit is further configured to create, based on the site template and the one or more predefined standards, the industrial site ontology. In an embodiment, the industrial site ontology indicates the hierarchical structure of the one or more assets within the industrial site. The processing unit is further configured to generate the set of rules based on mapping the one or more coding conventions to the industrial site ontology. In an embodiment, the set of rules indicates mapping the one or more coding conventions with the corresponding one or more assets. The processing unit is further configured to generate the one or more industrial site models based on correlating the set of rules and a knowledge graph. In an embodiment, the one or more industrial site models indicate the relationships between the one or more assets within the industrial automation platform. The processing unit is further configured to classify the one or more assets based on the one or more coding conventions. The processing unit is further configured to establish the relationship between the industrial site and the industrial automation platform based on the classification such that the industrial automation platform manages, monitors, and controls the one or more assets within the industrial site according to the one or more predefined standards.

The object of the present invention is also achieved by a computer-program product being disclosed. The computer-program product has machine-readable instructions stored therein, that when executed by one or more processors, cause the one or more processors to perform one or more methods, as discussed throughout the present invention.

The object of the present invention is also achieved by a non-transitory computer-readable medium being disclosed. The non-transitory computer-readable medium is encoded with executable instructions, that when executed by one or more processors, cause the one or more processors to perform one or more methods, as discussed throughout the present invention.

To further clarify the advantages and features of the present invention, a more particular description of the invention will be rendered by reference to specific embodiments thereof, which are illustrated in the appended drawings. It is appreciated that these drawings depict only typical embodiments of the invention and are therefore not to be considered limiting of its scope. The invention will be described and explained with additional specificity and detail with the accompanying drawings.

These and other features, aspects, and advantages of the present invention will become better understood when the following detailed description is read with reference to the accompanying drawings in which like characters represent like parts throughout the drawings, wherein:
FIG 1 illustrates a relationship between the industrial automation platform and the industrial site, in accordance with the existing art;
FIG 2 illustrates a block diagram depicting an environment for an implementation of the system for establishing the relationship between the industrial site and the industrial automation platform, in accordance with an embodiment of the present invention;
FIG 3 illustrates a functional block diagram of the system for establishing the relationship between the industrial site and the industrial automation platform, in accordance with an embodiment of the present invention; and
FIG 4 illustrates a flow chart of a method for managing the relationship between the industrial site and the industrial automation platform, in accordance with an embodiment of the present invention.

Further, skilled artisans will appreciate that elements in the drawings are illustrated for simplicity and may not have necessarily been drawn to scale. For example, the flow charts illustrate the method in terms of the most prominent steps involved to help improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

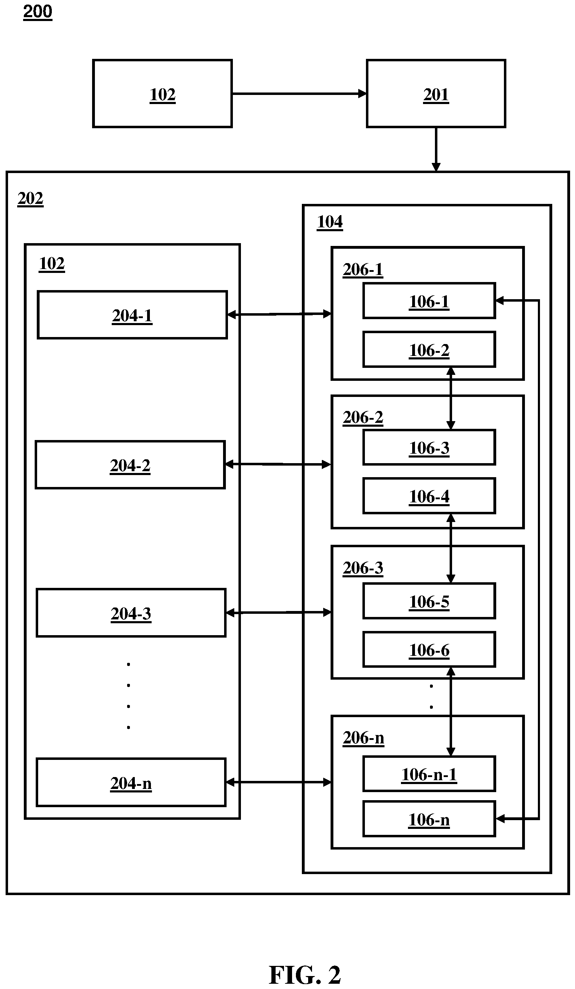

FIG 2 illustrates a block diagram depicting an environment 200 for implementation of the system 201 for establishing the relationship between the industrial site 104 and the industrial automation platform 102, in accordance with an embodiment of the present invention. As shown in FIG 2, the environment 200 may include the industrial automation platform 102. The industrial automation platform 102 may include a plurality of automation components 204-1, 204-2, ..., 204-n (collectively referred to as "automation components 204"). In an embodiment, the industrial automation platform 102 comprises at least one of PLC, Panel, Industrial Information Hub (IIH) Edge data services, and SCADA systems. The automation components may further include, but are not limited to, sensors, actuators, DCS, PCS, HMI, software solutions, etc. The automation components 204 may be configured to automatically control, monitor, and manage the one or more assets 106 within the industrial site 104. The industrial automation platform 102 may also include one or more automation codes associated with the automation components 204.

The environment 200 may further include the system 201 which takes the one or more automation codes as input and generates the one or more industrial site models 202. For the sake of convenience, FIG 2 only shows one industrial site model. However, it should be noted that multiple industrial site models may also be generated.

In an embodiment, the industrial site models 202 may illustrate the classification 206-1, 206-2, ... 206-n of the one or more assets 106 based on the one or more coding conventions. For example, the one or more assets 106 may be classified based on functional type. For example, referring to FIG 2, the classification 206-1 may pertain to equipment directly involved in manufacturing or processing, and may include assets 106-1 (e.g., pump) and 106-2 (e.g., conveyor). Similarly, the classification 206-2 may pertain to auxiliary equipment supporting the operation of main production processes, and may include assets 106-3 (i.e., compressors) and 106-4 (i.e., cooling systems). In a similar manner, classification 206-3 may pertain to devices involved in automation and control, and may include assets 106-5 (e.g., sensors) and 106-6 (e.g., actuators). Moreover, classification 206-n may include safety-related equipment such as assets 106-n-1 (e.g., emergency shut-off valve) and 106-n (e.g., alarms).

Advantageously, the classification 206 of the one or more assets 106 based on the one or more coding conventions optimizes asset management, streamline operations of the one or more assets 106, and improves maintenance workflows.

Additionally, the industrial site models 202 may indicate relationships between the one or more assets 106 within the industrial automation platform 102. Referring to FIG 2, the industrial site models 202 may indicate that the automation component 204-1 (e.g., a PLC) controls the operation of the asset 106-1 (e.g., pump). Similarly, the industrial site models 202 may indicate that the automation component 204-2 (e.g., a predictive maintenance software) analyzes operational data from the asset 106-3 (e.g., compressor) to predict when maintenance is needed, helping to avoid downtime or failures, and so on.

The industrial site models 202 may also depict the interconnections between the one or more assets 106 within the industrial site 104. For example, the industrial site models 202 may depict that the asset 106-1 is interconnected with the asset-n, the asset 106-2 is interconnected with the asset-3, the asset 106-4 is interconnected with the asset-4, and so on.

In an advantageous aspect, the industrial site models 202 provides a representation capturing the structure, processes, systems, and the one or more assets 106 within the industrial site 104, thereby allowing for effective management, analysis, and optimization of operations within the industrial site. Further, the industrial site models 202 ensure an efficient operation of the industrial site 104 while maximizing performance, minimizing downtime, and ensuring compliance with industry standards and regulations.

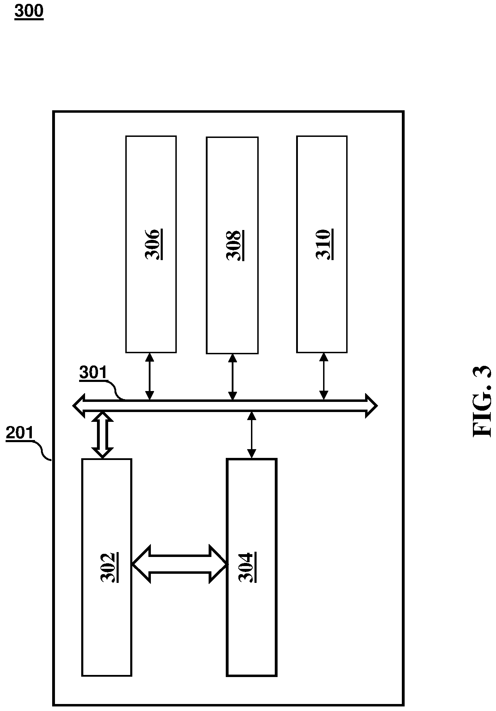

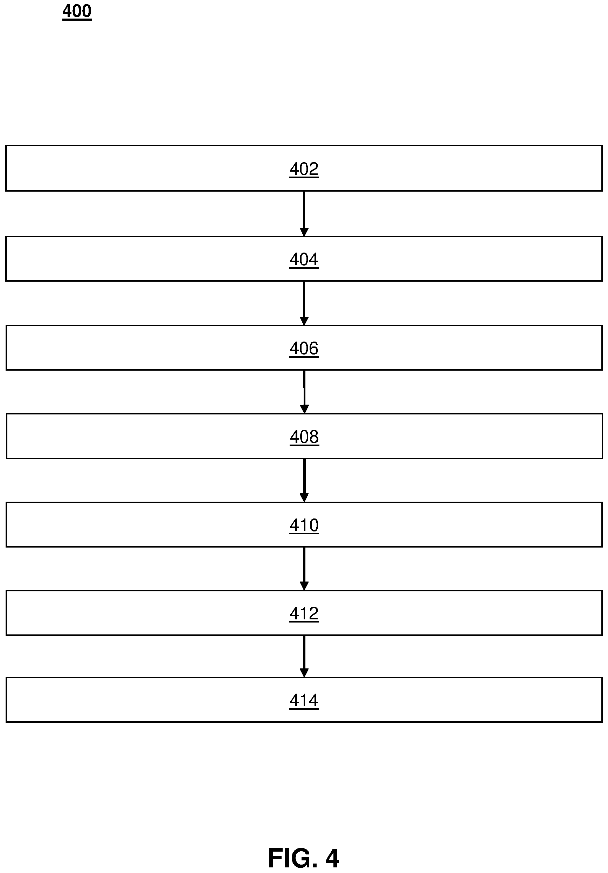

The generation of the industrial site models 202 by the system 201 is explained in greater detail in conjunction with FIG 3 and FIG 4 in the forthcoming paragraphs.

**FIG** 3 illustrates a functional block diagram of the system 201 for establishing the relationship between the plant model and the automation code, in accordance with an embodiment of the present invention.

As shown in FIG 3, the system 201 comprises a bus 301, a processing unit 302, a memory unit 304, a communication unit 306, an I/O interface 308, and one or more modules 310.

The bus 310 acts as an interconnect between the processing unit 302, the memory 304, the communication unit 306, the I/O interface 308, and the one or more modules 310 of the system 201. The bus 310 may include a wired interconnection or a wireless interconnection.

The processing unit 302 may include one or more processors as a single processing unit or several units. The processing unit 302 may be implemented as one or more microprocessors, microcomputers, microcontrollers, digital signal processors, central processing units, state machines, logic circuitries, and/or any devices that manipulate signals based on operational instructions. Among other capabilities, the one or more processors 302 are configured to fetch and execute computer-readable instructions and data stored in the memory unit 304.

Referring to FIG 3, the processing unit 302 may be configured to receive one or more coding conventions associated with the industrial automation platform 102. In an embodiment, the one or more coding conventions intends to control the one or more assets 106 within the industrial site 104. In an embodiment, the one or more coding conventions comprises at least one of, the naming rules, the structural rules, and the library standards.

Advantageously, the one or more coding conventions provide standardized rules for naming, categorizing, and organizing the one or more assets 106, thereby significantly improving the management and operational efficiency of the industrial site 104.

For example, if the one or more coding conventions use a naming rule like "ASSET_TYPE_LOCATION_ID", "PUMP_BUILDING A_P1" would represent a "pump" located in "building A" with ID "P1".

The processing unit 302 is further configured to generate the site template by mapping the one or more coding conventions with the one or more assets 106 based on one or more predefined standards. In an embodiment, the site template indicates an industrial site hierarchy of the one or more assets 106. In an embodiment, the site template may be based on user specified parameters. The user specified parameters may include, but are not limited to, industrial site name, industrial site location, industrial site type, industrial site identification (ID), industrial site description, asset ID, asset category, asset location, asset specifications, maintenance schedule, process name, process flow, process steps, control system type, control system architecture, HMI/SCADA configurations, alarm settings, etc. In an embodiment, the predefined standards may include ISA-88 (Batch Control Standard), ISA-95 (Enterprise-Control System Integration Standard), and similar standards.

Advantageously, generating the site template by mapping the one or more coding conventions with the one or more assets 106 based on one or more predefined standards provides a layout identifying each of the one or more assets 106 within the industrial site 104 as well as locations, roles, and interactions of the one or more assets 106. Thus, the site template ensures that the industrial site 104 operates efficiently, meets regulatory standards, and can be easily managed.

For example, if the coding convention "ASSET_TYPE_LOCATION_ID" is mapped to an asset representing the "pump P1" in "building A", the site template will show the pump's position in the industrial site's 104 hierarchy.

The processing unit 302 is further configured to create, based on the site template and the one or more predefined standards, the industrial site ontology. In an embodiment, the industrial site ontology indicates a hierarchical structure of the one or more assets 106 within the industrial site 104. In an embodiment, the processing unit 302 is configured to create the industrial site ontology based on the one or more predefined standards indicating rules, structures, and configurations for managing the one or more assets 106 within the industrial site 104.

Advantageously, the industrial site ontology provides a semantic representation of the industrial site 104 outlining the position of the one or more assets 106, attributes, relationships, and interactions between the one or more assets 106, and operation of the one or more assets 106. Thus, the industrial site ontology facilitates a better understanding of the industrial site 104, ensuring seamless data integration as well as compliance with the regulatory standards. The industrial site ontology may also provide a layered view of the industrial site's assets 106.

For example, the industrial site ontology may show that a "pump" is located in "room 1" of the "ground floor" of "building A" and is part of the "manufacturing system".

The processing unit 302 is further configured to generate the set of rules based on mapping the one or more coding conventions to the industrial site ontology. In an embodiment, the set of rules indicates mapping the one or more coding conventions with the corresponding one or more assets 106.

Advantageously, the set of rules specifies management and monitoring for each of the one or more assets 106, thereby improving interoperability between the one or more assets 106 within the industrial site 104.

For example, if a rule based on mapping the one or more coding conventions to the industrial site ontology is "LogData(COMPRESSOR_BUILDING B_C1, "temperature", 10)", the rule may specify that the "compressor C1" located in "building B" must log "temperature" data every "10 minutes".

The processing unit 302 is further configured to generate one or more industrial site models 202 based on correlating the set of rules and the knowledge graph. In an embodiment, the one or more industrial site models 202 indicate relationships between the one or more assets 106 within the industrial automation platform 102.

Advantageously, the industrial site models 202 provide a representation capturing the structure, processes, systems, and the one or more assets 106 within the industrial site 104, thereby allowing for effective management, analysis, and optimization of operations within the industrial site 104. Further, the industrial site models 202 ensure efficient operation of the industrial site 104 while maximizing performance, minimizing downtime, and ensuring compliance with industry standards and regulations.

In an embodiment, the processing unit 302 may be configured to create the knowledge graph based on correlating the one or more coding conventions and the site template.

In an advantageous aspect, the knowledge graph significantly improves the operational efficiency and enables efficient utilization of the relationships between the industrial site 104 and the industrial automation platform 102.

Further, in an advantageous aspect, the use of the knowledge graph, combined with standardized query and constraint languages, as well as built-in text search engines facilitates the efficient management of the relationships between the industrial site 104 and the industrial automation platform 102. This further enables the development of service applications on top of a common query interface.

In an advantageous aspect, the use of the knowledge graph with the corresponding search and constraint languages provides standardized, powerful, and flexible approaches for searching, ensuring consistency, and generating knowledge as compared to the conventional techniques.

For example, as shown in FIG 2, the industrial site models 202 may indicate that the asset 106-1 (e.g., pump) which is directly involved in the manufacturing process is controlled by the automation component 204-1 (e.g., the PLC), and is interconnected to the asset 106-n (e.g., a safety-related equipment - alarm).

The processing unit 302 is further configured to classify the one or more assets 106 based on the one or more coding conventions.

Advantageously, the classification 206 of the one or more assets 106 based on the one or more coding conventions optimizes asset management, streamlines operations of the one or more assets, and improves maintenance workflows. Further, the classification 206 enables better data integration, improved compliance, and supports future digitalization efforts, thereby contributing to overall operational excellence.

For example, the processing unit 302 may classify the one or more assets 106 based on hierarchy (e.g., asset level 1, asset level 2, etc.), functional type (e.g., process assets, control assets, support assets, safety assets, etc.), location (e.g., building/area, zone, etc.).

The processing unit 302 is further configured to establish the relationship between the industrial site 104 and the industrial automation platform 102 based on the classification 206 such that the industrial automation platform 102 manages, monitors, and controls the one or more assets 106 within the industrial site 104 according to the one or more predefined standards.

In an advantageous aspect, establishing the relationship between the industrial site 104 and the industrial automation platform 102 helps the user to easily identify which part of the industrial automation platform 102 needs to be modified when the user wishes to update or expand the industrial site, thereby enhancing decision-making. The establishment of the relationship between the industrial site 104 and the industrial automation platform 102 also helps the user to easily identify which part of the industrial site 104 needs to be updated or expanded when the user wishes to modify the industrial automation platform 102. Further, the explicit support for the relationships between the industrial site 104 and the industrial automation platform 102 enables the efficient establishment of these relationships and even allows for the automatic generation of part of the automation code based on the industrial site 104 during the engineering phase. Furthermore, establishing the relationship between the industrial site 104 and the industrial automation platform 102 based on the classification 206 enables the industrial automation platform 102 to control the one or more assets 106 as per the one or more predefined standards.

In further advantageous aspect, the generation of the industrial site ontology for the industrial site 104 and the software/automation/HMI structures enables discipline-specific work to be performed independently, while maintaining synchronization through the established relationships in the knowledge graph.

For example, the industrial automation platform 102 may monitor and control compressors (i.e., assets) according to Cooling System standards, automatically adjusting based on temperature thresholds defined by the predefined industry standards.

In an embodiment, the processing unit 302 may be configured to generate visualizations based on the knowledge graph and industrial site ontology. In an embodiment, the visualization comprises the hierarchical structure of the industrial site 104, relationships between the industrial automation platform 102, the one or more assets 106, and performance metrics. In an embodiment, the performance metrics may include, but are not limited to, material flow capabilities of the industrial site 104, throughput, cycle time, yield, energy usage per unit of production, energy cost per unit of production, power factor, material waste, recycling rate, water usage per unit of production, downtime, asset utilization, etc.

Advantageously, the visualizations based on the knowledge graph and industrial site ontology enable assessment and monitoring of the performance of the one or more assets 106 and operations in the industrial site 104 thereby evaluating the effectiveness of the one or more assets 106 and operations. Further, the visualizations represent the one or more assets 106, relationships, and processes within the industrial site 104, thereby improving management and operational insights of the industrial site 104.

In an embodiment, the processing unit 302 may be configured to generate real-time visualizations corresponding to interactions of the industrial automation platform 102 and the one or more assets 106.

Advantageously, the real-time tracking visualizations enable tracking of the status, performance, and health of the one or more assets 106, as well as help in understanding how the industrial automation platform 102 is interacting with the one or more assets 106 within the industrial site 104. Thus, the real-time visualizations improve operational visibility, optimize performance, and enable proactive decision-making.

In an embodiment, the processing unit 302 may be configured to generate reports comprising automation platform performance, operational anomalies, and maintenance schedules. In an embodiment, the reports are generated based on data extracted from the knowledge graph and the one or more predefined standards.

Advantageously, the reports ensure the smooth operation of the industrial site 104 by providing transparency into the performance of the industrial automation platform 102, highlighting operational issues, and ensuring timely maintenance.

The memory unit 304 includes one or more computer-readable storage media that can communicate via the bus 301. The memory unit 304 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory may, in some examples, be considered a non-transitory storage medium. The term "non-transitory" may indicate that the storage medium is not embodied in a carrier wave or a propagated signal. However, the term "non-transitory" should not be interpreted to mean that the memory is non-movable. In certain examples, a non-transitory storage medium may store data that can, over time, change (e.g., in Random Access Memory (RAM) or cache.

The memory unit 304 may further include any non-transitory computer-readable medium known in the art including, for example, volatile memory, such as static random-access memory (SRAM) and dynamic random-access memory (DRAM), and/or non-volatile memory, such as read-only memory (ROM), erasable programmable ROM, flash memories, hard disks, optical disks, and magnetic tapes. The memory unit 304 also includes a database. The database is configured to be accessed by the processing unit 302 and stores information as required by processing unit 302 to perform the one or more functions.

The communication unit 306 is configured to communicate sensor data, or any other content over a communication network via a communication port or interface or using the bus 301. Further, the communication unit 306 may include a communication port or a communication interface for sending and receiving signals via a communication network. The communication port or the communication interface may be a part of the processing unit 302 or may be a separate component. The communication port may be created in software or may be a physical connection in hardware. The communication port may be configured to connect with the communication network, external media, the display, or any other components in the system 201, or combinations thereof. The connection with the communication network may be a physical connection, such as a wired Ethernet connection, or may be established wirelessly. Likewise, the additional connections with other components of the system 201 may be physical or may be established wirelessly. The communication unit 306 may include the Wi-Fi module or Bluetooth module for enabling wireless communication capability and data exchange capability between various modules of the system 201.

The I/O interface 308 refers to hardware or software components that enable communication between various modules of the system 201. The I/O interface 308 serves as a communication medium for exchanging information, commands, signals, or query responses with other devices or systems. The I/O interface 308 may be a part of the processing unit 302 or maybe a separate component. The I/O interface 308 may be created in software or maybe a physical connection in hardware. The I/O interface 308 may be configured to connect with an external network, external media, the display, or any other components, or combinations thereof. The external network may be a physical connection, such as a wired Ethernet connection, or may be established wirelessly.

The one or more modules 310, amongst other things, may include routines, programs, objects, components, data structures, etc., which perform particular tasks or implement data types. The module(s) 210 may be implemented as, signal processor(s), state machine(s), logic circuitries, and/or any other device or component that manipulates signals based on operational instructions.

In an embodiment, the present invention also contemplates a computer-program product, having machine-readable instructions stored therein, when executed by the one or more processors, cause the one or more processors to perform a method for managing the relationship between the industrial site 104 and the industrial automation platform 102. The details on the method(s) performed by the one or more processors have been elaborated in subsequent paragraphs at least with reference to FIG. 4.

Further, the present invention also contemplates a non-transitory computer-readable medium encoded with executable instructions. The executable instructions, when executed by the one or more processors, cause the one or more processors to perform the method for managing the relationship between the industrial site 104 and the industrial automation platform 102. The details on the method(s) performed by the one or more processors have been elaborated in subsequent paragraphs at least with reference to FIG. 4.

FIG 4 illustrates a flow chart of a method 400 for managing the relationship between the industrial site 104 and the industrial automation platform 102, in accordance with an embodiment of the present invention. In an embodiment, the industrial automation platform 102 comprises at least one of, the PLC, Panel, IIH Edge data services, and SCADA systems. The method 400 includes a series of operation steps 402 through 414 performed by the processing unit 302 of the system 201.

At step 402, the method 400 comprises receiving one or more coding conventions associated with the industrial automation platform 102 intended to control one or more assets 106 within the industrial site 104. In an embodiment, the one or more coding conventions includes at least one of, the naming rules, the structural rules, and the library standards.

At step 404, the method 400 comprises generating the site template by mapping the one or more coding conventions with the corresponding one or more assets 106 based on the one or more predefined standards. In an embodiment, the site template indicates the hierarchy of the industrial site 104. In an embodiment, the site template is based on user specified parameters. In an embodiment, the predefined standards include ISA-88, ISA-95, and other similar standards.

At step 406, the method 400 comprises creating the industrial site ontology based on the site template and the one or more predefined standards. In an embodiment, the industrial site ontology indicates the hierarchical structure of the one or more assets 106 within the industrial site 104. In an embodiment, the method 400 comprises creating the industrial site ontology based on the one or more predefined standards indicating rules, structures, and configurations for managing the one or more assets 106 within the industrial site 104.

At step 408, the method 400 comprises generating the set of rules based on mapping the one or more coding conventions to the industrial site ontology.

At step 410, the method 400 comprises generating the one or more industrial site models 202 based on correlating the set of rules and the knowledge graph. In an embodiment, the one or more industrial site models 202 indicate the relationships between the one or more assets 106 within the industrial automation platform 102. In an embodiment, the method 400 comprises creating the knowledge graph based on correlating the one or more coding conventions and the site template.

At step 412, the method 400 comprises classifying the one or more assets 106 based on the one or more coding conventions.

At step 414, the method 400 comprises establishing the relationship between the industrial site 104 and the industrial automation platform 102 based on the classification 206 such that the industrial automation platform 102 manages, monitors, and controls the one or more assets 106 within the industrial site 104 according to the one or more predefined standards.

In an embodiment, the method 400 comprises generating the visualizations based on the knowledge graph and the industrial site ontology. In an embodiment, the visualization comprises the hierarchical structure of the industrial site 104, relationships between the industrial automation platform 102 and the one or more assets 106, and the performance metrics.

In an embodiment, the method 400 comprises generating the real-time visualizations corresponding to the interactions of the industrial automation platform 102 and the one or more assets 106.

In an embodiment, the method 400 comprises generating reports comprising automation platform performance, operational anomalies, and maintenance schedules. In an embodiment, the reports are generated based on data extracted from the knowledge graph and the one or more predefined standards.

In an advantageous aspect, the method 400 significantly improves the management and operational efficiency of the industrial site 104.

In an advantageous aspect, the method 400 allows for effective management, analysis, and optimization of operations within the industrial site 104, a better understanding of the industrial site 104, ensuring seamless data integration as well as compliance with standards.

In an advantageous aspect, the method 400 improves interoperability between the one or more assets 106 within the industrial site 104.

In an advantageous aspect, the method 400 helps the user to easily identify which part of the industrial automation platform 102 needs to be modified when the user wishes to update or expand the industrial site 104, thereby enhancing decision-making. The method 400 also helps the user to easily identify which part of the industrial site 104 needs to be updated or expanded when the user wishes to modify the industrial automation platform 102. Further, the method 400 enables the efficient establishment of the relationships between the industrial site 104 and the industrial automation platform 102 and even allows for the automatic generation of part of the automation code based on the industrial site 104 during the engineering phase.

In an advantageous aspect, the method 400 enables efficient utilization of the relationships between the industrial site 104 and the industrial automation platform 102.

In an advantageous aspect, the method 400 enables tracking of the status, performance, and health of the one or more assets 106, as well as helps in understanding how the industrial automation platform 102 is interacting with the one or more assets 106 within the industrial site 104. Thus, the method 400 improves the overall operational visibility, optimizes performance, and enables proactive decision-making.

The various actions, acts, blocks, steps, or the like in the flow diagrams may be performed in the order presented, in a different order, or simultaneously. Further, in some embodiments, some of the actions, acts, blocks, steps, or the like may be omitted, added, modified, skipped, or the like without departing from the scope of the invention.

Unless otherwise defined, all technical and scientific terms used herein have the same meaning as commonly understood by one ordinary skilled in the art to which this invention belongs. The system, methods, and examples provided herein are illustrative only and not intended to be limiting.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practised with modification within the scope of the embodiments as described herein.

**List of Reference Numerals:**

| | |
|---|---|
| INDUSTRIAL AUTOMATION PLATFORM | 102 |
| INDUSTRIAL SITE | 104 |
| ASSETS | 106 |
| ENVIRONMENT | 200 |
| SYSTEM | 201 |
| AUTOMATION COMPONENTS | 202 |
| INDUSTRIAL SITE MODELS | 204 |
| CLASSIFICATIONS OF ASSETS | 206 |
| BUS | 301 |
| PROCESSING UNIT | 302 |
| MEMORY UNIT | 304 |
| COMMUNICATION UNIT | 306 |
| I/O INTERFACE | 308 |
| MODULE(S) | 310 |
| METHOD | 400 |

## Claims

1. A method (400) for managing a relationship between an industrial site (104) and an industrial automation platform (102), the method (400) comprising:
receiving (402), by one or more processors (302), one or more coding conventions associated with the industrial automation platform (102) intended to control one or more assets (106) within the industrial site (104);
generating (404), by the one or more processors (302), a site template by mapping the one or more coding conventions with corresponding one or more assets (106) based on one or more predefined standards, wherein the site template indicates a hierarchy of the industrial site (104);
creating (406), by the one or more processors (302), an industrial site ontology based on the site template and the one or more predefined standards, wherein the industrial site ontology indicates a hierarchical structure of the one or more assets (106) within the industrial site (104);
generating (408), by the one or more processors (302), a set of rules based on mapping the one or more coding conventions to the industrial site ontology;
generating (410), by the one or more processors (302), one or more industrial site models (202) based on correlating the set of rules and a knowledge graph, wherein the one or more industrial site models (202) indicates relationships between the one or more assets (106) within the industrial automation platform (102);
classifying (412), by the one or more processors (302), the one or more assets (106) based on the one or more coding conventions; and
establishing (414), by the one or more processors (302), the relationship between the industrial site (104) and the industrial automation platform (102) based on the classification (206) such that the industrial automation platform (102) manages, monitors, and controls the one or more assets (106) within the industrial site (104) according to the one or more predefined standards.

2. The method (400) according to any of the preceding claims, further comprising creating the knowledge graph based on correlating the one or more coding conventions and the site template.

3. The method (400) according to any of the preceding claims, further comprising generating visualizations based on the knowledge graph and industrial site ontology, wherein the visualization comprises the hierarchical structure of the industrial site (104), relationships between the industrial automation platform (102) and the one or more assets (106), and performance metrics.

4. The method (400) according to any of the preceding claims, further comprising generating real-time visualizations corresponding to interactions of the industrial automation platform (102) and the one or more assets (106).

5. The method (400) according to any of the preceding claims, further comprising generating reports comprising automation platform performance, operational anomalies, and maintenance schedules, wherein the reports are generated based on data extracted from the knowledge graph and the one or more predefined standards.

6. The method (400) according to any of the preceding claims, wherein the site template is based on user specified parameters.

7. The method (400) according to any of the preceding claims, wherein creating the industrial site ontology is based on the one or more predefined standards indicating rules, structures, and configurations for managing the one or more assets (106) within the industrial site (104).

8. The method (400) according to any of the preceding claims, wherein the one or more coding conventions comprises at least one of, naming rules, structural rules, and library standards.

9. The method (400) according to any of the preceding claims, wherein the industrial automation platform (102) comprises at least one of, Programmable Logic Controller (PLC), Panel, Industrial Information Hub (IIH) Edge data services, and Supervisory Control and Data Acquisition (SCADA) systems.

10. A system (201) for establishing a relationship between an industrial site (104) and an industrial automation platform (102), the system (201) comprising:
a memory (304); and
a processing unit (302) coupled with the memory (304), wherein the processing unit (302) is configured to:
receive one or more coding conventions associated with the industrial automation platform (102), wherein the one or more coding conventions intends to control one or more assets (106) within the industrial site (104);
generate a site template by mapping the one or more coding conventions with the one or more assets (106) based on one or more predefined standards, wherein the site template indicates an industrial site hierarchy of the one or more assets (106);
create, based on the site template and the one or more predefined standards, an industrial site ontology, wherein the industrial site ontology indicates a hierarchical structure of the one or more assets (106) within the industrial site (104);
generate a set of rules based on mapping the one or more coding conventions to the industrial site ontology, wherein the set of rules indicates mapping the one or more coding conventions with the corresponding one or more assets (106);
generate one or more industrial site models (202) based on correlating the set of rules and a knowledge graph, wherein the one or more industrial site models (202) indicates relationships between the one or more assets (106) within the industrial automation platform (102);
classify the one or more assets (106) based on the one or more coding conventions; and
establish the relationship between the industrial site (104) and the industrial automation platform (102) based on the classification (206) such that the industrial automation platform (102) manages, monitors, and controls the one or more assets (106) within the industrial site (104) according to the one or more predefined standards.

11. A computer-program product having machine-readable instructions stored therein, which when executed by one or more processors (304), cause the one or more processors (304) to perform a method (400) according to any of the claims 1 to 9.

12. A non-transitory computer readable medium encoded with executable instructions which, when executed by one or more processors (304), causes the one or more processors (304) to perform a method (400) according to any one of the claims 1 to 9.
